Europäisches Patentamt

European Patent Office

Office européen des brevets

(19)

(11) Publication number: 0 369 411
A1

## (12) EUROPEAN PATENT APPLICATION

(21) Application number: 89121089.0

(22) Date of filing: 14.11.89

(51) Int. Cl.⁵: **F16C 1/14, F16G 11/00**

(30) Priority: **14.11.88 ES 8803454**

(43) Date of publication of application:
**23.05.90 Bulletin 90/21**

(84) Designated Contracting States:
**DE FR GB IT**

(71) Applicant: **PUJOL Y TARRAGO, S.A.**
**Avenida Castellbisbal s/n**
**E-08191 Rubi(ES)**

(72) Inventor: **Solano Sallan, Victorino**
**18, Calle Montseny**
**E-08190 Sant Cugat Del Valles(ES)**
Inventor: **Trilla Segura, Antonio**
**68, Calle S crates**
**E-08030 Barcelona(ES)**

(74) Representative: **Schwabe, Hans-Georg,**
**Dipl.-Ing. et al**
**Patentanwälte Schwabe, Sandmair, Marx**
**Stuntzstrasse 16**
**D-8000 München 80(DE)**

(54) Link device for two control cable portions.

(57) Link device for two control cable portions. It comprises a tubular cylindrical body (1) having a narrower cylindrical hollow end portion (2) which is attached to the rest of the body (1) by a solid, slightly tapering transition portion (3) having a narrow longitudinal through-bore (4) through which a respective cable portion (5) may be inserted and a capsule (12) having a similar geometrical shape fits outside the body (1) determining between both component members a tubular housing or chamber (13) in which the ends of the two control cable portions (5 and 9) are housed which are provided with mutually connected terminals (8 and 14) which when joined together may move between the limits determined by the two solid end portions (3 and 19).
It finds application in the motor industry.

FIG. 5

# LINK DEVICE FOR TWO CONTROL CABLE PORTIONS

The invention relates to a link device for two control cable portions.

In the assembly process of automobiles carried out in modern factory installations, there are frequent control cable assembly operations which, due to the great length of the cables or to the excessive flexion and/or torsion with which they are installed, are extremely laborious and hard to perform, unnecessarily consuming considerable time and effort. Such is the case of the so-called compact automobiles and of those others which have a transverse engine in which the cables are short and are very forced.

In the above cases, it is usually preferable not only from the technical or economical point of view, but also for the very organization and security of the work process, to replace the assembly of one control cable with the assembly of two cable portions which one assembled or linked together carry out the same function as the single cable with identical efficacy, reliability and durability.

It is therefore one object of this invention to provide a link device for two control cable portions which satisfactorily meet the requirements imposed e. g. by automobile manufacturing needs, by speedily, readily and economically solving the worrying waste of time in the control cable installation operation. Although the invention has been devised for the specific problem described above, because of its very nature it may be applied with the same success, as it is or with minimum adaptations, to any mechanism, device or mechanical installation using control cables where similar problems arise.

The link device for two control cable portions according to the present invention comprises a tubular cylindrical body having a narrower cylindrical hollow end portion which is attached to the rest of the body by a solid slightly tapering transition portion having a narrow longitudinal throughbore through which a respective cable portion may be inserted, and a capsule having a similar geometrical shape which, oppositely disposed, fits outside the body determining between both component members a tubular housing in which the ends of the two control cable portions are housed which are provided with mutually connectable terminals which, when joined together, may move between the limits determined by the two solid end portions.

As may be gathered from the foregoing succinct description, the link device comprises a very small, practically minimal number of members, having a carefully studied shape, dimensions and tolerance range which, once assembled, are fully integrated in the control cable unit thus formed, the coupling having in turn a mechanical strength which may be compared in solidity and stability with that of a conventional, e. g. undivided, control cable. Furthermore, it is extremely easy and speedy to mount on the assembly line and does not require any type of special tooling.

A further characteristic of the present link device is that the cylindrical tubular body is provided with a longitudinal slot having a resilient closing tab which is hingedly connected to the edge of the slot itself thanks to the resilience of the constituent plastics material, said slot and tab extending from the wider end of the body up to close to the tapering transition portion, thereby allowing, in the assembly operation of the device, the passage of the cable portion and terminal thereof, incorporated in the tubular capsule so that it may be coupled with the terminal of the other cable portion located inside the tubular body, the said tab being terminated with a thickened portion extending from the tubular surface of the body and which may be retainably inserted in a window situated in the tubular capsule with which it mates in position and dimensions after assembly.

It should be noted that the remarkable advantages of durability, strength and miniaturization provided by the link device of the invention are possible due to the physical and mechanical properties of the materials used in the manufacture of the component members of said device. In fact, the use of synthetic resins allows the tubular body and the capsule to have the desired physical and structural qualities and the dimensions to lie within a very tight tolerance range. An example of the foregoing is precisely the tubular body slot closing tab, formed simultaneously with the tubular body to which it is hingedly connected along the narrow thin wall connecting them, so that it acts as a hinge and is inserted accurately and precisely in the longitudinal slot of the tubular body. Furthermore, the resilience of the tab avoids the thicker portion which extends from one of its ends from preventing or hindering the insertion of the tubular body in the capsule, at the same time as it determines its insertion in the window with which the capsule is provided, when they mate positionally, thereby acting as a joining clip between both.

A further characteristic of the link device of the invention is that the respective narrower end portions of the tubular body and of the capsule, which are hollow, may snugly house in the interior thereof the ends of the respective sheaths of the control cable portions, thereby acting as terminals therefor.

This constructional feature is very useful and is determined by practical needs, allowing a complete integrated device to be prepared. The snugness with which the end of the sheath of each cable portion is inserted in the corresponding narrower hollow portion of the tubular body and of the capsule, respectively, ensures stability and duration of the mutual assembly.

The sheet of drawings accompanying this specification shows as a non-limitative example one embodiment of the object of the present invention and therein:

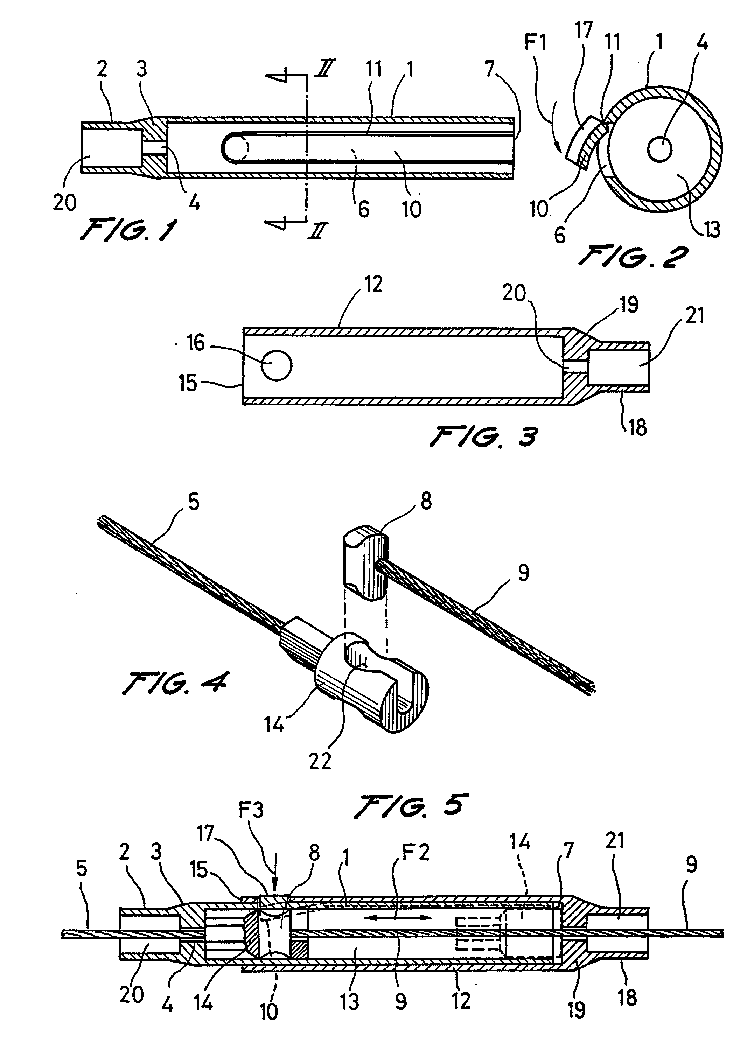

FIGURE 1 is a longitudinal section view of one component member of the link device of the invention, showing its particular structure and form.

FIGURE 2 is a view on a larger scale of the above member along the line II-II of FIGURE 1, showing other characteristic details.

FIGURE 3 is a longitudinal section view of the other component member of the link device of the invention, showing its particular structure and form, in a coupling position with the member shown in FIGURE 1.

FIGURE 4 is a perspective view of the ends of the control cable portions, showing how they are mutually connected together by way of their respective terminals.

And FIGURE 5 is a longitudinal section view of the device with its component members arranged in an operative situation.

In accordance with the drawings and with the reference numbers given therein, a link device for two control cable portions of the present invention comprises a cylindrical tubular body 1 having a narrower end portion 2 connected to the rest of the body by a solid, externally tapering transition portion 3, which is provided with a narrow longitudinal bore 4 through which the cable portion 5 passes. The side surface of the body 1 is provided with a slot 6 extending from an end 7 up to close to the transition portion 3, its width being sufficient to allow the passage therethrough of a terminal 8 of the other control cable portion 9. The slot 6 is provided with a slot closing tab 10 which is connected to the body 1 by way of a flexible hinge portion along a substantial length of the edge 11. The resilience of said hinge portion is essential to ensure a simple, speedy and reliable assembly of the device, this being achieved due to the physical and mechanical properties of the plastics materials used in the manufacture of the device, which allow a considerable number of flexions as indicated with the arrow F1 without loss of strength.

The link device according to the invention also comprises a tubular capsule 12 of a shape and proportions similar to those of the tubular body 1 with the peculiarity that the latter may be inserted snugly within the former and be held therein stably and permanently once the device has been assembled. After said assembly, a tubular space or chamber 13 is formed between the body 1 and the capsule 12 in which the ends of the two control cable portions 5 and 9, provided with their suitably assembled respective terminals 8 and 14, are housed. When either of said cables is pulled, they may slide easily in the chamber between the abutments defined by the solid portions 3 and 14 which limit the chamber 13.

Close to the open end 15, the capsule 12 is provided with a window 16 in which a thickened portion 17 of the tab 10 located on the body 1 may be inserted for their mutual holding. At the opposite end to the end 15, similarly to the body 1, the capsule 12 is provided with a narrower portion 18 and a solid tapering intermediate portion 19 which is provided with a bore 20 through which the other cable portion is threaded. The two narrow portions 2 and 18 are hollowed out and are shaped to house therein the ends of the sheaths of the control cable portions 5 and 9 (not shown in the FIGURES), acting as an extension thereof once the device has been coupled together.

The cable portions 5 and 9 are linked together by the respective terminals 8 and 14 which, in the case of the embodiment shown, consist of the larger terminal 14, being provided with a cavity 22 in which the terminal 8 fits exactly so that the axis of the said two cable portions 5 and 9 are aligned. Once the assembled terminals have been located in the chamber 13, they may slide jointly in the interior thereof (as shown by the arrow F2 of FIGURE 5), without any difficulty when required by the primary control cable portion, that is the one on which the operator of the machine in which the device of the invention is installed directly acts.

Furthermore, the assembly process may be reversed and if for any practical or technical reason it is necessary to dismantle the device, it may be easily done by pressing the thickened portion 17 as indicated by the arrow F3 of FIGURE 5 and while holding it depressed remove the body 1 from the capsule 12 in a sufficient extent to remove the terminal 8 from its housing in the other terminal 14.

In FIGURE 5 the terminals 18 and 14 are to be seen, in the chamber 13, in solid lines in one end position, which could be the rest position of the device and in dash lines in the opposite end, which would be the working position.

## Claims

1. A link device for two control cable portions, characterised in that it comprises an essentially tubular cylindrical body (1) having a narrower cylindrical hollow end portion (2) having a narrow longitudinal through-bore (4) through which a respective cable portion (5) may be inserted and a capsule (12) having a similar geometrical shape which, oppositely disposed, fits outside the body (1) determining between both component members a tubular housing or chamber (13) in which the ends of the two control cable portions (5 and 9) are housed which are provided with mutually connectable terminals (8 and 14) which when joined together may move between the limits determined by the two solid end portions (3 and 19).

2. - A link device for two control cable portions, characterised in that it comprises a tubular cylindrical body (1) having a narrower cylindrical hollow end portion (2) which is attached to the rest of the body (1) by a solid slightly tapering transition portion (3) having a narrow longitudinal through-bore (4) through which a respective cable portion (5) may be inserted and a capsule (12) having a similar geometrical shape which, oppositely disposed, fits outside the body (1) determining between both component members a tubular housing or chamber (13) in which the ends of the two control cable portions (5 and 9) are housed which are provided with mutually connectable terminals (8 and 14) which when joined together may move between the limits determined by the two solid end portions (3 and 19).

3.- The link device for two control cable portions of claim 1 or 2, characterised in that the cylindrical tubular body (1) is provided with a longitudinal slot (6) having a resilient closing tab (10) which is hingedly connected to the edge (11) of the slot (6) thanks to the resilience of the constituent plastics material, said slot (6) and tab (10) extending from the end (7) of the body (1) up to close to the tapering transition portion (3), thereby allowing, in the assembly operation of the device, the passage of the cable portion (9) and the terminal (8) thereof, which is incorporated in the tubular capsule (12) so that it may be coupled with the terminal (14) of the other cable portion (5) already previously located inside the tubular body (1), the said tab (10) being terminated with a thickened portion (17) extending from the tubular surface of the body and which may be retainably inserted in a window (16) situated in the tubular capsule (12) with which it mates in position and dimensions after assembly.

4.- The link device for two control cable portions of claims 1-3, characterised in that the respective narrower end portions (2 and 18) of the tubular body (1) and of the capsule (12), which are hollow, may snugly house in their interior (20 and 21) the ends of the respective sheaths of the control cable portions (5 and 9), thereby acting as terminals therefor.

FIG. 1

FIG. 2

FIG. 3

FIG. 4

FIG. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-1 931 732 (TELEFLEX) <br> * Page 7, line 1 - page 9, line 4; figures 1,2,6 * <br> --- | 1,2,4 | F 16 C 1/14 <br> F 16 G 11/00 |
| X | DE-C- 722 661 (GERHARD FIESELER WERKE) <br> * Whole document * <br> --- | 1,2 | |
| X | DE-C- 719 512 (GERHARD FIESELER WERKE) <br> * Whole document * | 1 | |
| A | --- | 2 | |
| A | FR-A- 833 792 (FICHTEL-SACHS) <br> * Page 2, lines 12-100; figures 1,5 * <br> --- | 1,2,4 | |
| A | FR-A-2 447 489 (BOWDEN CONTROLS) <br> --- | | |
| A | FR-A- 359 717 (DRING) <br> ----- | | |

TECHNICAL FIELDS
SEARCHED (Int. Cl.5)

F 16 C
F 16 G

The present search report has been drawn up for all claims

| Place of search | Date of completion of the search | Examiner |
|---|---|---|
| THE HAGUE | 14-02-1990 | BARON C. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

   & : member of the same patent family, corresponding
   document

EPO FORM 1503 03.82 (P0401)